# EUROPEAN PATENT APPLICATION

(11) **EP 2 213 512 A1**
(43) Date of publication of application: **04.08.2010**
(21) Application number: 08843583.9
(22) Date of filing: 02.10.2008
(51) Int. Cl.: B60Q 1/02, B60Q 1/04, B60Q 1/24, B60R 21/00

(54) **VEHICULAR LIGHTING DEVICE**

(30) Priority: 31.10.2007 JP 2007283824
(71) Applicant: Panasonic Corporation, Kadoma-shi Osaka 571-8501 (JP)
(72) Inventor: IWAI, Kazuhiko, Osaka 540-6207 (JP); KUROSAWA, Yoichi, Osaka 540-6207 (JP); TOKUHIRO, Takafumi, Osaka 540-6207 (JP); KUBOTANI, Hiroyuki, Osaka 540-6207 (JP)
(74) Representative: Grünecker, Kinkeldey, Stockmair & Schwanhäusser Anwaltssozietät
(86) International application number: PCT/JP2008/002772
(87) International publication number: WO 2009/057248

(57) **Abstract**

An illumination apparatus for vehicle capable of improving visibility of a driver with respect to an object of traffic environment of the periphery of a vehicle is provided. A vehicle periphery detection section 2 detects a pedestrian, a bicycle, an oncoming car, a forward running car, a sign, an indication and a traffic signal which are an object of traffic environment in the periphery of a vehicle. A vehicle operation detection section 3 acquires a speed of its own vehicle, a steering angle of steering and information about inclination (angular speed sensor) of the vehicle. An illumination section 4 irradiates the periphery of its own vehicle and the front of its own vehicle with light. A color estimation section 15 estimates a color of the object of the traffic environment detected by the vehicle periphery detection section 2. A light toning section 13 changes all or any of illuminance, luminance and color temperature K (kelvin) of the light according to the color of the object of traffic environment. A light irradiation range control section 14 controls an irradiation range of the light toned based on a position to the object of the traffic environment, the inclination, the steering angle and the vehicle speed acquired by the vehicle operation detection section 3.

## Description

### Technical Field

The present invention relates to an illumination apparatus for vehicle, and relates to an illumination apparatus for vehicle constructed so that visibility of a driver can be improved by detecting an object of traffic environment in the periphery of a vehicle and irradiating the object with light toned according to a color of the object of the traffic environment.

### Background Art

A vehicle conventionally includes an illumination apparatus for vehicle such as a headlight in order to improve visibility of the front of a driver at night etc. As the conventional illumination apparatus for vehicle, there are devices described in, for example, Patent Reference 1 and Patent Reference 2.

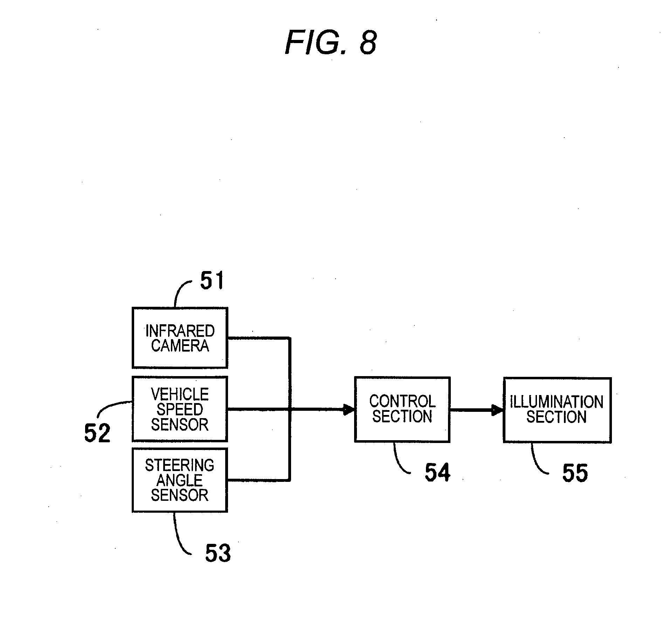

A headlamp optical axis direction automatic adjusting apparatus for vehicle described in Patent Reference 1 is an apparatus for maintaining, expanding and changing an irradiation range of a headlamp by a state as to whether an object present on a road of the front of a vehicle is stationary or moving. Fig. 8 shows a schematic configuration of the headlamp optical axis direction automatic adjusting apparatus for vehicle described in Patent Reference 1. This headlamp optical axis direction automatic adjusting apparatus for vehicle has an infrared camera 51 for detecting an obstacle, a vehicle speed sensor 52 for detecting a vehicle speed, a steering angle sensor 53 for detecting a direction of a vehicle, a control section 54 for performing control so that its obstacle is irradiated with light when the obstacle moving in the front is present and light irradiation is performed as it is when the stationary obstacle is present, and an illumination section 55 for irradiating the obstacle with light according to a signal from the control section 54. According to the headlamp optical axis direction automatic adjusting apparatus for vehicle described in Patent Reference 1, visibility of the front of a driver can be improved since an irradiation range of the headlamp can be expanded according to a vehicle speed of a vehicle and an obstacle present on a road of the front of the vehicle.

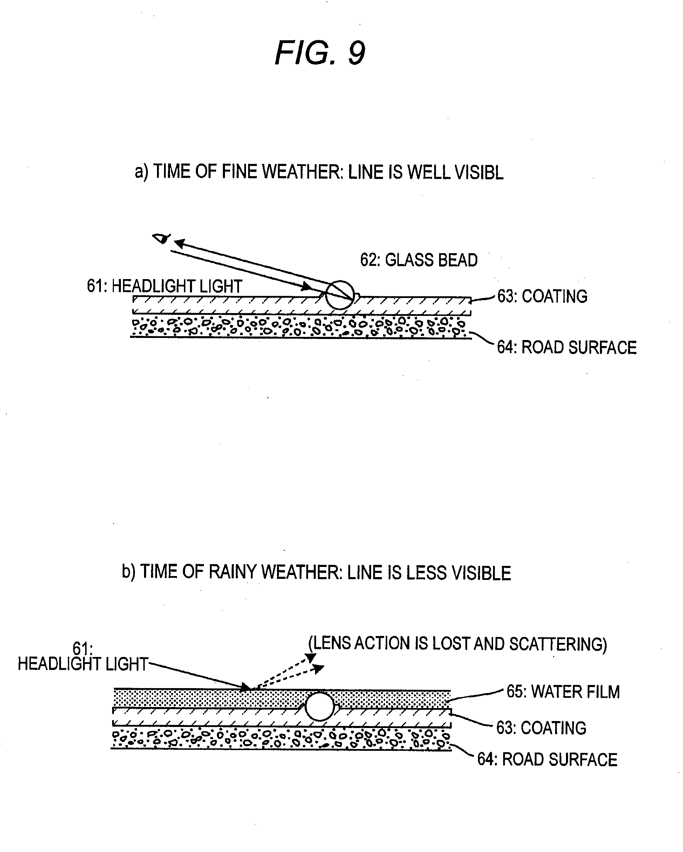

Also, an apparatus for changing an irradiation range, an irradiation direction and a color of light in an illumination apparatus for vehicle according to a retroreflection ratio of a road surface is described in Patent Reference 2. Fig. 9 is an explanatory diagram of a retroreflection function at the time of fine weather and rainy weather. As shown in Fig. 9(a), at the time of fine weather, headlight light 61 is retroreflected by glass beads 62 included in a coating 63 on a road surface 64, so that the coating 63 (line) is well visible. On the other hand, as shown in Fig. 9(b), at the time of rainy weather, the coating 63 is covered with a water film 65 and lens action of the glass beads 62 is lost, so that the headlight light 61 is scattered and the coating 63 (line) is less visible. According to the headlamp apparatus for vehicle described in Patent Reference 2, visibility related to a road surface can be improved even when a retroreflection ratio of the road surface reduces, for example, at the time of rainy weather shown in Fig. 9(b).

Patent Reference 1: JP-A-2003-72461
Patent Reference 2: JP-A-7-144577

### Disclosure of the Invention

### Problems that the Invention is to Solve

However, visibility of a driver is also influenced by a color of an object of traffic environment of the periphery of a vehicle. For example, in the case of visually recognizing a yellow color, a yellow color of a road sign differs from a yellow color of road indication in a kind of color, so that the visibility of the driver varies. Therefore, light control according to a retroreflection ratio of a road surface and expansion of an irradiation range is insufficient in order to ensure the visibility of the driver.

An object of the invention has been implemented in view of the conventional circumstances described above, and is to provide an illumination apparatus for vehicle capable of improving visibility of a driver with respect to an object of traffic environment of the periphery of a vehicle.

### Means for Solving the Problems

The invention provides an illumination apparatus for vehicle, comprising a vehicle periphery detection section that detects an object of traffic environment in a periphery of its own vehicle, a color estimation section that estimates a color of the object of the traffic environment detected by the vehicle periphery detection section, a light toning section that tones light based on the color of the object estimated by the color estimation section, and an illumination section that irradiates with the light toned by the light toning section. Advantage of the Invention

According to the illumination apparatus for vehicle according to the invention, the color of the object of the traffic environment detected is estimated and the object is irradiated with the light toned based on the color of the object estimated and thereby, the object can be irradiated with the light so as to emphasize the object of the traffic environment, so that visibility of a driver can be improved.

### Brief Description of the Drawings

[Fig. 1] Fig. 1 is a block diagram (1) representing a schematic configuration of an illumination apparatus for vehicle according to an embodiment of the invention.
[Fig. 2] Fig. 2 is a diagram showing an operation outline of the illumination apparatus 1 for vehicle according to the embodiment of the invention.
[Fig. 3] Fig. 3 is a diagram showing a concrete configuration of an illumination section 4 in the illumination apparatus 1 for vehicle according to the embodiment of the invention.
[Fig. 4] Fig. 4 is a diagram showing an example of a toned light irradiation range and a headlamp in the illumination apparatus 1 for vehicle according to the embodiment of the invention.
[Fig. 5] Fig. 5 is a diagram showing an example of a color and a toned light irradiation range in the illumination apparatus 1 for vehicle according to the embodiment of the invention.
[Fig. 6] Fig. 6 is a block diagram (2) representing a schematic configuration of an illumination apparatus for vehicle according to an embodiment of the invention.
[Fig. 7] Fig. 7 is a flowchart explaining an operation of an illumination control section 10 of the illumination apparatus 1 for vehicle according to the embodiment of the invention.
[Fig. 8] Fig. 8 is a diagram showing a schematic configuration of a conventional headlamp optical axis direction automatic adjusting apparatus for vehicle.
[Fig. 9] Fig. 9 is an explanatory diagram of a retroreflection function at the time of fine weather and rainy weather.

### Description of Reference Numerals and Signs

- 1: ILLUMINATION APPARATUS FOR VEHICLE
- 2: VEHICLE PERIPHERY DETECTION SECTION
- 3: VEHICLE OPERATION DETECTION SECTION
- 4,55: ILLUMINATION SECTION
- 10: ILLUMINATION CONTROL SECTION
- 11: OBJECT SHAPE EXTRACTION SECTION
- 12: OBJECT COLOR DETERMINATION SECTION
- 13: LIGHT TONING SECTION
- 14: LIGHT IRRADIATION RANGE CONTROL SECTION
- 15: COLOR ESTIMATION SECTION
- 21: OBJECT OF TRAFFIC ENVIRONMENT
- 22: TONED LIGHT IRRADIATION REGION
- 23: HEADLIGHT LIGHT IRRADIATION REGION
- 24: OWN VEHICLE
- 51: INFRARED CAMERA
- 52: VEHICLE SPEED SENSOR
- 52: STEERING ANGLE SENSOR
- 54: CONTROL SECTION
- 61: HEADLIGHT LIGHT
- 62: GLASS BEAD
- 63: COATING
- 64: ROAD SURFACE
- 65: WATER FILM

### Best Mode for Carrying Out the Invention

Embodiments of the invention will hereinafter be described with reference to the drawings.

### (Configuration of illumination apparatus for vehicle)

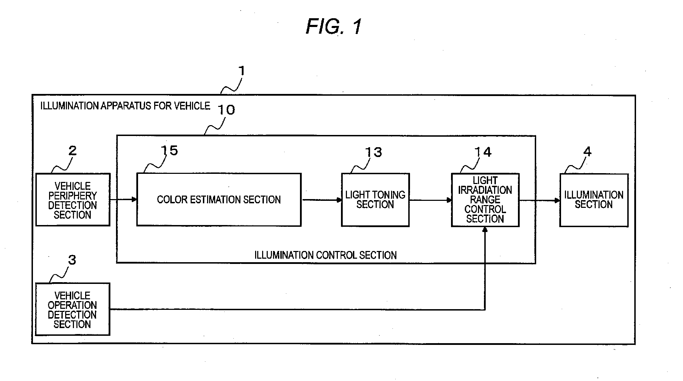

Fig. 1 is a block diagram representing a schematic configuration of an illumination apparatus 1 for vehicle in a first embodiment of the invention. The illumination apparatus 1 for vehicle is mounted in a vehicle such as a four-wheel vehicle or a two-wheel vehicle which is ridden by a person and moves. The illumination apparatus 1 for vehicle includes a vehicle periphery detection section 2, a vehicle operation detection section 3, an illumination section 4 and an illumination control section 10.

The vehicle periphery detection section 2 detects a pedestrian, a bicycle, an oncoming car, a forward running car, a sign, an indication, a traffic signal, etc. which are an object of traffic environment in the periphery of a vehicle. For example, the vehicle periphery detection section 2 is constructed by an image sensor, and acquires an image. Also, the vehicle periphery detection section 2 may be implemented by a radar, a laser, etc. as long as an image similar to the image sensor can be acquired.

The vehicle operation detection section 3 acquires a speed of its own vehicle, a steering angle of a steering and information about inclination (angular speed sensor) of the vehicle. The illumination section 4 irradiates the periphery of its own vehicle and the front of its own vehicle with light. A light source may be implemented by halogen, an LED (Light Emitting Diode), organic EL (Electro Luminescence), etc. and as long as a particular place and only the particular place can be irradiated with toned light, any implementation device may be used. A concrete configuration example of the illumination section 4 will be described below.

The illumination control section 10 performs control so as to be irradiated with light toned based on a shape of the object of the traffic environment, and includes a color estimation section 15, a light toning section 13 and a light irradiation range control section 14.

The color estimation section 15 estimates a color of the object of the traffic environment detected by the vehicle periphery detection section 2. Concretely, the color estimation section 15 estimates the color of each object every position of the object of traffic environment from an image outputted from the vehicle periphery detection section 2. The light toning section 13 changes all or any of illuminance, luminance and color temperature K (kelvin) of light according to the color of the object of the traffic environment estimated by the color estimation section 15. The light irradiation range control section 14 controls an irradiation range of the light toned based on a position to the object of the traffic environment, the inclination, the steering angle and the vehicle speed acquired by the vehicle operation detection section 3.

### (Operation outline of illumination apparatus for vehicle)

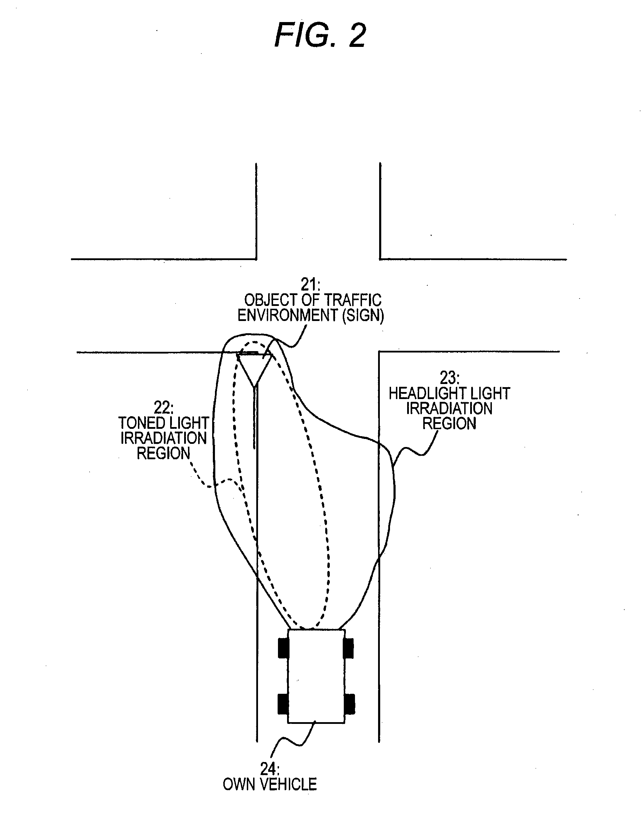

Fig. 2 is an outline diagram explaining an operation outline of the illumination apparatus 1 for vehicle of the present embodiment. An example in which the illumination apparatus 1 for vehicle mounted in its own vehicle 24 irradiates the front including a road sign 21 with light at night is shown. The illumination apparatus 1 for vehicle mounted in its own vehicle 24 normally irradiates a headlight light irradiation region 23 with light. When the illumination apparatus 1 for vehicle detects the object (sign) 21 of the traffic environment by the vehicle periphery detection section 2, a color of the object 21 is estimated by the color estimation section 15. Then, the light is toned according to the color of the object 21 by the light toning section 13 and an irradiation range 22 is decided with reference to an output of the vehicle operation detection section 3 by the light irradiation range control section 14 and the illumination section 4 irradiates the object 21 of traffic environment with toned light. That is, the illumination apparatus 1 for vehicle irradiates a region (toned light irradiation region) 22 including the object 21 of traffic environment among the headlight light irradiation region 23 with the toned light.

According to the illumination apparatus 1 for vehicle of the embodiment thus, when the object 21 of traffic environment is detected, the light is toned according to the color of the object 21, and the object 21 of traffic environment is irradiated with the toned light, so that the object 21 can be irradiated so that the object 21 is most noticeable.

### (Concrete configuration example and irradiation example of illumination section)

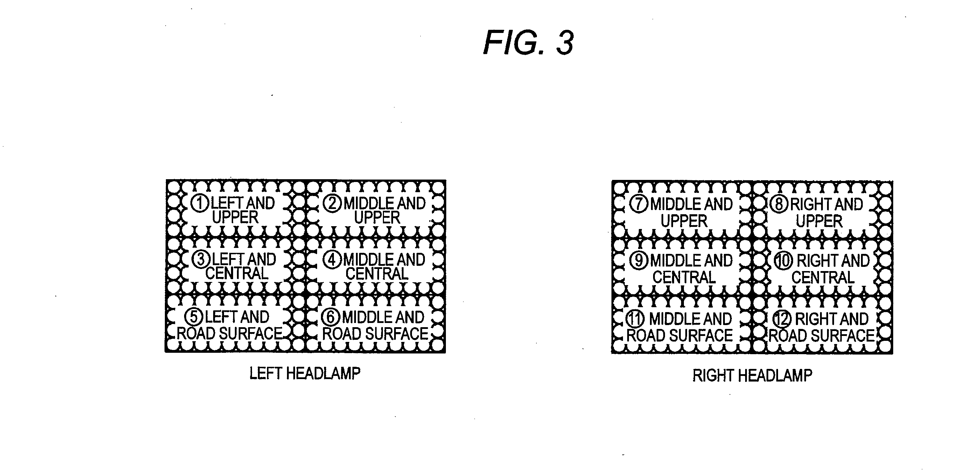

Fig. 3 shows a concrete configuration example of the illumination section 4 in the illumination apparatus 1 for vehicle of the embodiment. The illumination section 4 uses an LED headlamp capable of surface emission, and an LED can perform toning control every element. In the embodiment, right and left LED headlamps are respectively divided into six regions and toned light and its irradiation range are controlled every each region.

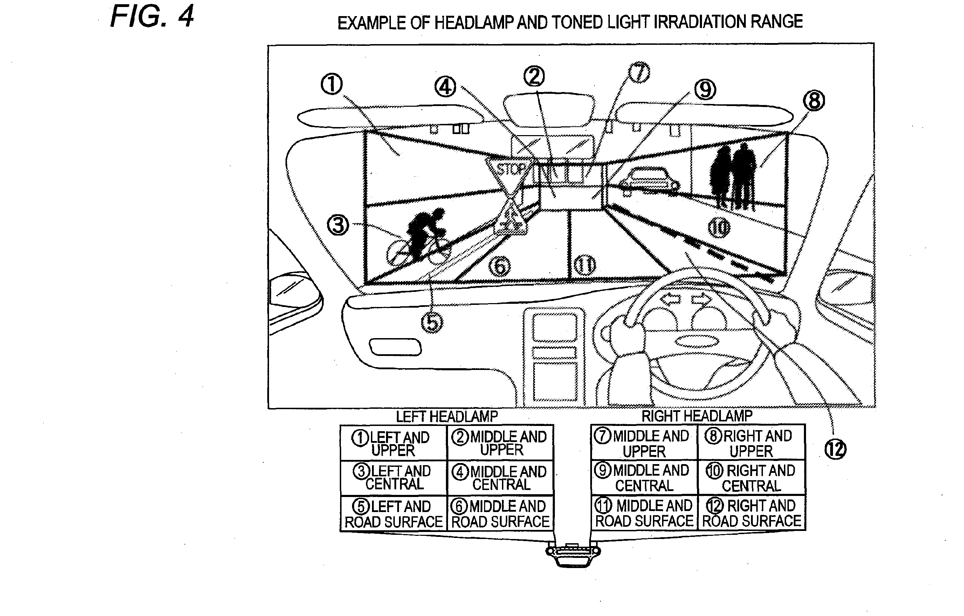

Fig. 4 shows an example of a toned light irradiation range and a headlamp in the illumination apparatus 1 for vehicle of the embodiment. The left headlamp is divided into (1) a left and upper region, (2) a middle and upper region, (3) a left and central region, (4) a middle and central region, (5) a left and road surface region and (6) a middle and road surface region and is controlled and irradiates the regions of (1) to (6) of the front of a vehicle.

Also, the right headlamp is similarly divided into (7) a middle and upper region, (8) a right and upper region, (9) a middle and central region, (10) a right and central region, (11) a middle and road surface region and (12) a right and road surface region and is controlled and irradiates the regions of (7) to (12) of the front of the vehicle.

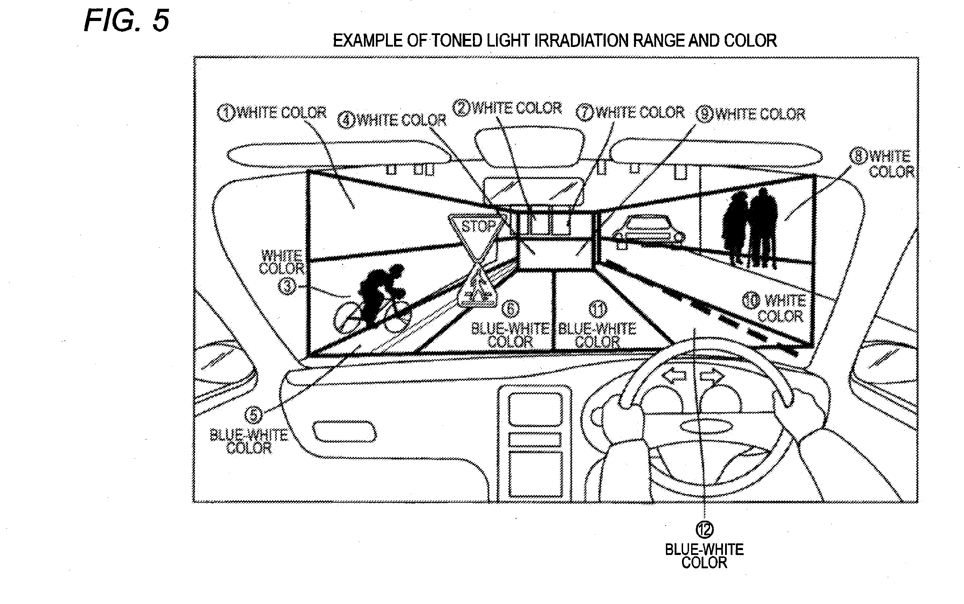

Fig. 5 shows an example of a color and a toned light irradiation range in the illumination apparatus 1 for vehicle of the embodiment. In Fig. 5, objects of traffic environment such as a bicycle, a pedestrian, a sign and an oncoming vehicle are present in the front of a vehicle. Hence, the illumination apparatus 1 for vehicle irradiates the regions with light in which, for example, (1) the left and upper region, (2) the middle and upper region, (3) the left and central region, (4) the middle and central region, (7) the middle and upper region, (8) the right and upper region, (9) the middle and central region and (10) the right and central region are toned as a white color and (5) the left and road surface region, (6) the central and road surface region, (11) the middle and road surface region and (12) the right and road surface region are toned as a blue-white color according to colors of the objects of traffic environment.

According to the illumination apparatus 1 for vehicle of the embodiment thus, a color of an object of traffic environment detected is estimated and light is toned based on the color of the object estimated and an irradiation range of the light toned is controlled and the object of traffic environment is irradiated with the toned light from its own vehicle, so that visibility of a driver with respect to the object of traffic environment of the periphery of the vehicle can be improved at night etc. and an obstacle can be found early.

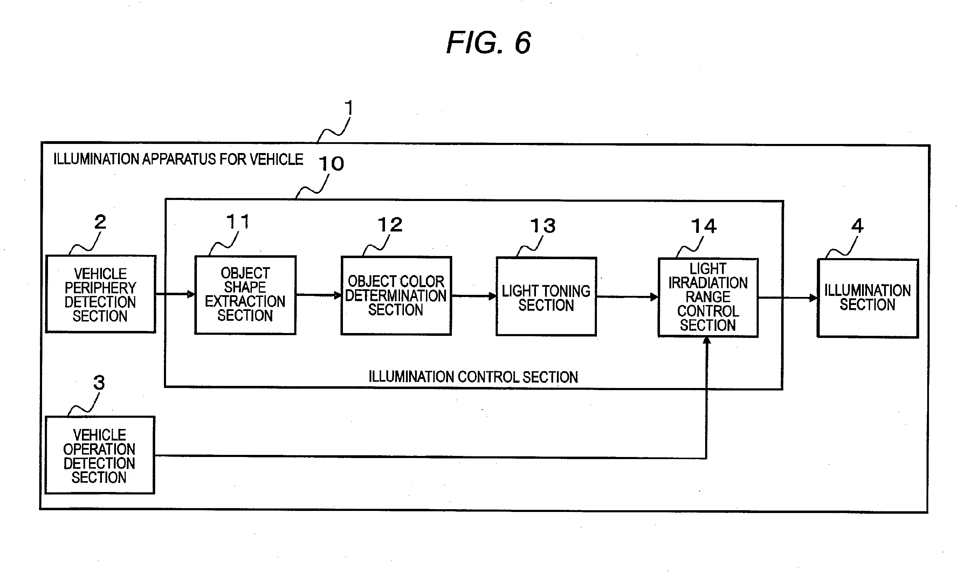

Fig. 6 is a block diagram representing a schematic configuration of an illumination apparatus 1 for vehicle in a second embodiment of the invention. The illumination apparatus 1 for vehicle differs from the illumination apparatus 1 for vehicle shown in Fig. 1 in a configuration of an illumination control section 10. In the illumination apparatus 1 for vehicle of the present embodiment, the illumination control section 10 includes an object shape extraction section 11, an object color determination section 12, a light toning section 13 and a light irradiation range control section 14. That is, the object shape extraction section 11 and the object color determination section 12 shown in Fig. 6 correspond to the color estimation section 15 shown in Fig. 1, and estimate a color of an object of traffic environment detected by a vehicle periphery detection section 2.

The object shape extraction section 11 extracts a shape of an object from an image acquired by an image sensor of the vehicle periphery detection section 2. The object color determination section 12 determines a color of an object based on the shape of the object acquired. Concretely, the object color determination section 12 determines the object color based on, for example, a table for storing correspondence between a color and the time and date and a place for a pedestrian and correspondence between a color and a shape for a sign according to a kind of the object detected by the object shape extraction section 11. In addition, there is the case where a blue sign (for example, "pedestrianization") and a red sign (for example, "do not enter") are present even for the same shape (for example, a circle), and in this case, any color is determined from a pattern of the object.

The light toning section 13 changes all or any of illuminance, luminance and color temperature K (kelvin) of light according to a color of an object of traffic environment. The light irradiation range control section 14 controls an irradiation range of light toned based on a position to an object of traffic environment, inclination, a steering angle and a vehicle speed acquired by a vehicle operation detection section 3.

### (Operation flowchart of vehicle illumination control section)

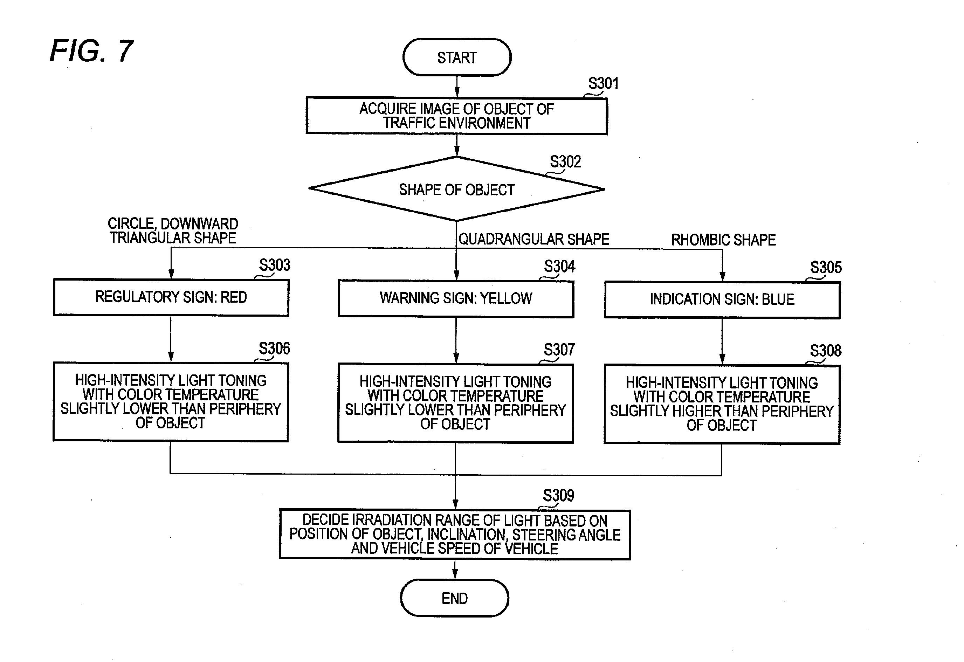

Fig. 7 is a flowchart explaining an operation outline of the illumination control section 10 in the illumination apparatus 1 for vehicle of the embodiment. The operation outline of the illumination control section 10 will hereinafter be described by taking the case where an object of traffic environment is a road sign as an example. The vehicle periphery detection section 2 acquires an image of an object of traffic environment in the periphery of a vehicle (S301). The object shape extraction section 11 acquires and determines a shape of the object based on the image of the object acquired (S302).

The road sign includes a regulatory sign, a warning sign and an indication sign, and the shapes are respectively different. Also, its color is different by a kind of sign. The object color determination section 12 determines that the color of the object with the regulatory sign is red when a shape of the sign is a circle or a downward triangular shape (S303), and determines that the color of the object with the warning sign is yellow when a shape of the sign is a rhombic shape (S304), and determines that the color of the object with the indication sign is blue when a shape of the sign is a quadrangular shape (S305). Thus, the object color determination section 12 can determine the object color based on, for example, a table for storing correspondence between a color and the time and date and a place for a pedestrian and correspondence between a color and a shape for a sign. Also, the object color determination section 12 may, for example, associate a color with a shape of a vehicle and determine that the color is red when the vehicle is a sports car.

Next, when the object is red, the light toning section 13 and an illumination section 4 irradiate the object with a high-intensity light source having good color rendering properties with color temperature slightly lower than that of light at the time of normal irradiation, that is, light with which the periphery of the object is irradiated and thereby, a red color of the object is vividly visible and visibility of a driver improves (S306). Also, when the object is yellow, the object is irradiated with a high-intensity light source having good color rendering properties with color temperature slightly lower than that of the periphery of the object and thereby, a yellow color of the object is vividly visible and visibility of a driver improves (S307). When the object is blue, the object is irradiated with a high-intensity light source having good color rendering properties with color temperature slightly higher than that of the periphery and thereby, a blue color of the object is vividly visible and visibility of a driver improves (S308). This is because the red color and yellow color of the object color are vividly visible when the object is irradiated with the high-intensity light source having good color rendering properties with color temperature slightly lower than that of the periphery.

Then, the light irradiation range control section 14 controls an irradiation range of light based on an object position of traffic environment, inclination, a steering angle and a vehicle speed of its own vehicle (S309). When a speed of its own vehicle is quick, the irradiation range of light is moved quickly with respect to an object of traffic environment. On the other hand, when the speed of its own vehicle is slow, the irradiation range of light is moved slowly with respect to the object of traffic environment.

According to the illumination apparatus 1 for vehicle of the embodiment thus, a shape of an object is extracted based on the object detected and a color of the object is determined based on the shape of the object extracted, so that the object can be irradiated with light toned according to the color of the object of traffic environment even in the case of being difficult to directly detect the color of the object, for example, at the time of a rainfall at night.

The case where an object of traffic environment is a road traffic sign has been described above as the example, but a pedestrian, a bicycle, a two-wheel vehicle, a vehicle, road indication or a traffic signal are also targeted as the object of traffic environment for the invention. In the case of the pedestrian, the whole pedestrian and a pedestrian partially hiding by a guardrail etc. are targeted. In the case of the bicycle and the two-wheel vehicle, the whole pedestrian driving the bicycle or the two-wheel vehicle, a bicycle partially hiding by a guardrail etc. and a pedestrian driving the two-wheel vehicle are also targeted. In the case of the vehicle, a four-wheel vehicle such as a big car, a wagon, a sports car and a normal passenger car are targeted. In the case of the road indication, a vehicular lane, a passing lane, a crosswalk, etc. are targeted.

In addition, a color of an object can be determined from the time and date and a place. For example, when a color of an object cannot be acquired from an image acquired by the vehicle periphery detection section 2 and a shape of the object, it may be determined that a pedestrian often wears black clothes for winter, and a color of clothes of a pedestrian may be determined based on the fact that a favorite color of clothes varies depending on countries and regions.

The invention has been described in detail with reference to the specific embodiments, but it is apparent to those skilled in the art that various changes or modifications can be made without departing from the spirit and scope of the invention.

The present application is based on Japanese patent application (patent application No. 2007-283824) filed on October 31, 2007, and the contents of which are hereby incorporated by reference.

### Industrial Applicability

The invention has an effect capable of improving visibility of a driver with respect to an object of traffic environment of the periphery of a vehicle, and can be used as an illumination apparatus for vehicle.

## Claims

1. An illumination apparatus for vehicle, comprising:
a vehicle periphery detection section that detects an object of traffic environment in a periphery of its own vehicle;
a color estimation section that estimates a color of the object of the traffic environment detected by the vehicle periphery detection section;
a light toning section that tones light based on the color of the object estimated by the color estimation section; and
an illumination section that irradiates with the light toned by the light toning section.

2. The illumination apparatus for vehicle according to claim 1, wherein the color estimation section estimates the color of the object of the traffic environment based on an output image of the vehicle periphery detection section.

3. The illumination apparatus for vehicle according to claim 1, wherein the color estimation section includes:
an object shape extraction section which extracts a shape of the object detected by the vehicle periphery detection section; and
an object color determination section which determines the color of the object based on the shape of the object extracted by the object shape extraction section.

4. The illumination apparatus for vehicle according to claim 1, comprising:
a vehicle operation detection section that acquires an inclination, a steering angle and a speed of its own vehicle; and
a light irradiation range control section that controls an irradiation range of the light toned by the light toning section based on a position between the object and its own vehicle, the inclination, the steering angle and the speed of its own vehicle acquired by the vehicle operation detection section,
wherein the illumination section irradiates the irradiation range controlled by the light irradiation range control section with the light toned by the light toning section.

5. The illumination apparatus for vehicle according to claim 1, wherein the vehicle periphery detection section detects all or any of a pedestrian, a bicycle, a two-wheel vehicle, an oncoming car, a forward running car, a white line, a sign and a traffic signal exist in the periphery of its own vehicle.

6. The illumination apparatus for vehicle according to claim 1, wherein the color estimation section estimates the color of the object of the traffic environment using all or any of a place and the time and date.

7. The illumination apparatus for vehicle according to claim 1, wherein the light toning section controls all or any of color temperature, luminance and illuminance.
